Europäisches Patentamt

European Patent Office

Office européen des brevets

(11) Numéro de publication : **0 379 399 B1**

(12) **FASCICULE DE BREVET EUROPEEN**

(45) Date de publication du fascicule du brevet :
29.03.95 Bulletin 95/13

(51) Int. Cl.⁶ : **G06T 15/00**

(21) Numéro de dépôt : **90400083.3**

(22) Date de dépôt : **12.01.90**

(54) **Procédé de calcul et d'exploitation de l'image en projection conique, par exemple au sens des rayons x, d'un objet tridimensionnel echantillonné, et procédé de reconstruction tridimensionnelle d'un objet étudié utilisant ce procédé de calcul.**

(30) Priorité : **20.01.89 FR 8900676**

(43) Date de publication de la demande :
**25.07.90 Bulletin 90/30**

(45) Mention de la délivrance du brevet :
**29.03.95 Bulletin 95/13**

(84) Etats contractants désignés :
**DE GB IT NL**

(56) Documents cités :
**EP-A- 0 234 922**
**APPLIED OPTICS, vol. 24, no. 23, 1 décembre 1985, pages 4028-4039, OpticalSociety of America, New York, US ; K.M. HANSON et al. : "Local-basis-functionapproach to computed tomography"**

(73) Titulaire : **GENERAL ELECTRIC CGR S.A.**
**100, rue Camille-Desmoulins**
**F-92130 Issy les Moulineaux (FR)**

(72) Inventeur : **Trousset, Yves, Cabinet Ballot-Schmit**
**7 rue le Sueur**
**F-75116 Paris (FR)**
Inventeur : **Saint Felix, Didier Cabinet Ballot-Schmit**
**7 rue le Sueur**
**F-75116 Paris (FR)**
Inventeur : **Rougée, Anne, Cabinet Ballot-Schmit**
**7 rue le Sueur**
**F-75116 Paris (FR)**
Inventeur : **Hanson, Kenneth, Cabinet Ballot-Schmit**
**7 rue le Sueur**
**F-75116 Paris (FR)**

(74) Mandataire : **Schmit, Christian Norbert Marie et al**
**Cabinet Ballot-Schmit**
**7, rue Le Sueur**
**F-75116 Paris (FR)**

EP 0 379 399 B1

## Description

La présente invention a pour objet un procédé de calcul et d'exploitation de l'image en projection conique, par exemple au sens des rayons X, d'un objet tridimensionnel (3D) échantillonné en éléments de volume, ainsi qu'un procédé de reconstruction tridimensionnelle d'un objet étudié utilisant ce procédé de calcul. L'invention trouve son utilisation plus particulièrement dans le domaine médical où les objets étudiés sont des corps de patients soumis à un examen radiologique. Dans ce but, elle concerne essentiellement la reconstruction tridimensionnelle. Cependant, elle serait également applicable à des procédés de reconstruction bidimensionnelle. De même elle est utilisable en visualisation d'un volume échantillonné. Le but de l'invention est de concourir à la production d'images représentatives d'objet 3D étudiés qui soient à la fois plus nettes et obtenues plus rapidement.

On connaît les reconstructions à deux dimensions (2D) d'images de coupes d'objets après des acquisitions (1D) en tomodensitométrie radiologique effectuées dans la coupe à imager. Les différentes générations de tomodensitomètres ont conduit à l'utilisation, en une troisième génération, des tomodensitomètres à faisceau de rayons X en éventail (fan beam), dans lesquels une source de rayons X ponctuelle illumine en rayonnement X un détecteur dit multidétecteur, comportant une pluralité de cellules alignées dans le plan du faisceau en éventail. L'objet à étudier est interposé entre la source à rayons X et le multidétecteur. L'acquisition comporte une série d'illuminations. D'une illumination à une autre l'ensemble source à rayons X-multidétecteur est tourné autour du corps à étudier. Si on appelle $\underline{s}$ la coordonnée longitudinale d'une cellule du multidétecteur sur ce multidétecteur, et si on appelle $\Theta$ l'angle de repérage de l'ensemble source à rayons X - multidétecteur au moment de l'illumination, on obtient de cette manière une série de mesures d'absorption radiologique notée $P(\Theta,s)$. Si on appelle x et y les coordonnées d'un élément de volume de l'objet à étudier, dans la coupe concernée, et si on note f(x, y,) la fonction d'atténuation linéaire du rayonnement X qui passe à travers l'objet, on peut écrire :

$$1 \qquad P(\Theta,s) \ = \ I_0 \exp\left[- \int_X f(x,y)\,dt\right]$$

Dans cette expression, X désigne le rayon X qui aboutit sur la cellule $\underline{s}$ alors que l'ensemble tube à rayons X-multidétecteur est dans l'orientation $\Theta$. $I_0$ est l'intensité incidente. Cette formulation n'est valable que dans les cas où la source est monoénergétique ; t est l'abscisse curviligne le long du rayon X.

L'application des théories de RADON avait conduit à rechercher la transformée de FOURIER monodimensionnelle de $P(\Theta,s)$ notée $\mathcal{P}_\Theta(u)$. En recherchant ensuite la transformée de FOURIER bidimensionnelle de f(x, y) notée $\mathcal{F}(v,w)$, on pouvait être conduit à identifier $\mathcal{P}_\Theta(u)$ et $\mathcal{F}(v, w)$ évaluées sur la droite d'angle $\Theta$. On en a déduit que par une transformée de FOURIER bidimensionnelle inverse de $\mathcal{F}(v,w)$ obtenue à partir de l'ensemble des $\mathcal{P}_\Theta(u)$ (après changement de variables et interpolation), on pouvait calculer la distribution de f(x,y) dans la coupe étudiée à partir des mesures $P(\Theta,s)$.

En pratique, on évite les transformées de FOURIER qui conduisent à des calculs trop longs et on utilise une technique dite de filtrage suivie de rétroprojection. Le filtrage consiste à calculer le produit de convolution de la fonction $P(\Theta,s)$, représentative des mesures, par une fonction de filtre q(s). Ce produit est le suivant :

$$2 \qquad P(\Theta,s)*q(s) \ = \int_{-\infty}^{+\infty} P(\Theta,t).q\,(s-t)\ dt$$

Dans cette expression t est une variable muette d'intégration. Le choix du filtre, qui revient à résoudre des mêmes problèmes que ceux rencontrés lors des changements de variables et de l'interpolation envisagée précédemment, conditionne la qualité des images obtenues. Dans l'opération de rétroprojection on attribue la valeur convoluée à tous les éléments de volume (voxel) de la coupe de l'objet étudié se trouvant sur le trajet

2

d'un rayon X (Θ,s) concerné. Pour en déduire l'image, on cumule pour chaque voxel les différentes valeurs convoluées attribuées.

Jusqu'à présent l'acquisition d'informations et la reconstruction 3D des structures examinées est effectuée en déplaçant en translation l'ensemble source à rayons X - multidétecteur le long du corps à étudier et en acquérant ainsi une pluralité d'images de coupe 2D adjacentes dans ce corps. Cependant cette technique est complètement déconseillée en angiographie où, pour obtenir du contraste sur les vaisseaux sanguins, on injecte un produit de constraste. L'injection de ce produit de contraste est traumatisante pour le patient surtout dans la mesure où elle est répétée trop souvent. Il est par exemple prohibé d'effectuer 256 injections de produit de contraste si on veut acquérir des images de 256 coupes adjacentes dans le corps. Outre cette prohibition dans les images d'angiographie, il faut reconnaître que la technique d'acquisition 2D et de reconstruction 2D correspondante est trop longue à mettre en oeuvre pour reconstruire les objets 3D. En effet, avec une résolution moyenne de 256 points par 256 points dans une image de coupe, la durée d'acquisition, avec un tomodensitomètre actuel, est de l'ordre de quatre secondes. Les acquisitions nécessaires à 256 coupes conduiraient alors à une durée d'examen proche de la demie heure. Cette durée est bien trop longue à supporter pour les patients et pour le système de santé en général (coût).

En théorie il est possible de généraliser la méthode de RADON en procédant à des acquisitions 3D et en effectuant directement la reconstruction 3D des objets à étudier. Par reconstruction 3D on entend le calcul d'un volume numérique dans lequel des cellules mémoires, placées à des adresses représentatives des voxels du volume étudié, contiennent une information correspondant à la distribution du phénomène (radiologique) étudié dans l'objet. Cependant, la théorie de RADON conduit à acquérir des mesures correspondant à l'intégration des caractéristiques physiques à imager dans un ensemble de sous-espace, dits hyperplans, dont la dimension est d'une unité inférieure à la dimension de l'espace étudié et à reconstruire. Autrement dit, pour un espace étudié 3D il faut disposer de résultats de mesure intégrés sur des hyperplans 2D. Or l'acquisition radiologique avec détecteur ponctuel ne peut être qu'une intégration des caractéristiques sur une droite (1D) : le rayon X. Dans la mesure où en pratique la trajectoire de la source ne respecte pas les conditions fixées par la théorie, il ne sera pas possible, à partir de la seule connaissance des projections suivant l'ensemble des droites (rayons X) ayant servi à l'acquisition, de calculer les projections selon tous les hyperplans nécessaires à la reconstruction. Autrement dit il manquera des points dans l'espace de Radon des mesures. Celui-ci ne sera pas remplit d'une manière régulière. La conséquence en est l'apparition d'artefacts dans les reconstructions 3D résultantes. Aussi, si des multidétecteurs à deux dimensions sont actuellement envisageables (arrangement de photo-détecteurs au silicium, utilisation d'écran intensificateur d'images radiologiques) les reconstructions 3D par cette méthode sont encore à ranger au rang des souhaits devant l'imperfection des résultats auxquels elle conduit quand on ne peut pas lui fournir beaucoup de données, comme c'est le cas dans les applications vasculaires.

Il a été envisagé une technique algébrique de reconstruction radicalement différente et basée sur les principes suivants. On connaît l'ensemble des mesures $P(\Theta,\tau,s)$ acquis avec un multidétecteur à deux dimensions, plan ou concave. On sait par ailleurs qu'il existe une fonction continue $f(x,y,z)$ représentative du phénomène d'absorption radiologique qu'on cherche à représenter. On cherche par la reconstruction à connaître f. Dans la pratique compte tenu de ce que tous les calculs sont effectués par des traitements de type informatique, la connaissance de f à l'issue est une connaissance échantillonnée. La nouvelle approche a consisté à estimer f par une fonction discrète notée $\hat{f}$ fixée à priori. Par exemple $\hat{f}$ peut au départ consister en un volume numérique où tous les voxels sont fixés à un (ou à zéro). On projette ensuite cette fonction discrète sur le multidétecteur comme si le volume étudié correspondait exactement à cette fonction discrète. On obtient une estimation notée $\hat{P}_i(f)$. Ceci peut encore s'écrire

$$3 \qquad \hat{P}_i(f) \; = \; H_i \hat{f}$$

Dans ces expressions i concerne une cellule numéro i du multidétecteur et $H_i$ représente la ligne i de la matrice H de projection qui correspond à la cellule i. La matrice de projection H est indépendante du corps étudié. Elle n'est dépendante que de la géométrie de projection. Elle en constitue la modélisation. On compare ensuite $\hat{P}_i(f)$ (estimé) à $P_i(f)$ (mesuré). S'il n'y a pas identité, et au début bien entendu il n'y a pas identité, on corrige f. Pour corriger, on effectue un épandage (back projection) sur l'objet à reconstruire de la valeur de la différence entre les projections mesurées et les projections calculées. Ceci s'écrit

$$4 \qquad \hat{f}_k \; = \; \hat{f}_{k-1} \; + \; \lambda_k \, (H_i * \varepsilon_i{}^k) \, / \, |H_i|^2$$

où $H_i$ est l'opérateur adjoint de $H_i*$ et ou $\varepsilon_i{}^k$ est la différence entre les projections mesurées et calculées à l'itération k-1.

On réitère cet ensemble de projections jusqu'à ce que l'identité de $\hat{P}_i(f)$ et de $P_i(f)$ soit suffisante. Cette technique a été décrite dans "IMAGES RECONSTRUCTION FROM PROJECTION" G. T. HERMAN ACADEMIC PRESS 1980.

Par ailleurs, si la matrice H de projection est une matrice binaire, avec des 1 et des 0, les résultats sont mauvais. Ainsi une première solution a consisté à approcher $\hat{P}$ par l'intégrale curviligne de f, prise le long d'une droite D reliant la source S et le centre de chaque cellule sur le multidétecteur. Ceci revient cependant à considérer que chaque cellule est de taille infiniment petite puisque de cette façon on ne prend pas en compte la surface réelle de la cellule, ni le caractère conique de la projection sur cette cellule. Le calcul de cette intégrale curviligne peut se mener de plusieurs manières. La plus simple consiste à approcher l'intégrale curviligne par une somme pondérée des valeurs des voxels traversés par le rayon le rayon X. Ainsi, on pourra écrire

$$5 \qquad \hat{P}_i(f) = \sum_j h_{ij} \cdot f_j$$

Dans cette formule $f_j$ représente la fonction d'absorption dans chacun des voxels (les éléments de volume échantillonnés) traversés, et $h_{ij}$ représente la pondération affectée à la valeur $f_j = f(x_j, y_j, z_j)$ pour ce voxel quand il est traversé par un rayon aboutissant sur la cellule i. Cette pondération peut-être approchée par la longueur de l'intersection entre le voxel traversé et le rayon X. Dans cette approximation, dite méthode des pixels carrés et décrite dans le premier document cité, les résultats fournis sont malheureusement d'une qualité insuffisante pour les applications envisagées.

Un autre calcul de pondération a été imaginé : il est décrit dans "AN IMPROVED ALGORITHM FOR RE-PROJECTING RAYS THROUGH PIXEL IMAGES", par P. M. JOSEPH, IEEE - MI, VOLUME 1, N° 3 PAGES 192-196. L'idée de base de cet autre calcul est d'approcher l'intégrale curviligne de f par une somme portant sur les valeurs interpolées de f prises aux intersections de la droite suivie par le rayon X et de droites horizontales (ou verticales) passant par les centres des voxels visités ou frôlés par le rayon X, ce rayon aboutissant au centre de la cellule du multidétecteur. Les valeurs de f en ces points d'intersection sont estimées au moyen d'une interpolation linéaire entre deux échantillons les plus proches, dans la direction horizontale (ou dans la direction verticale), suivant la pente de la droite du rayon X.

Une généralisation de la méthode des pieds carrés a été proposée par K. M. HANSON and G. W. WECKSUNG, "LOCAL BASIS - FUNCTIONS APPROACH TO COMPUTED TOMOGRAPHY", APPLIED OPTICS, VOL 24 N° 23, DECEMBRE 1985, PAGES 4028-4039. Dans cette généralisation on construit à partir des échantillons $f(x_j, y_j, z_j)$ une fonction continue $f(x,y,z)$ et on calcule la projection de cette fonction continue sur la cellule i du multidétecteur. Dans cette généralisation la fonction f est définie comme une combinaison linéaire d'un ensemble de fonctions de base $b_j(x,y,z)$, et on peut écrire :

$$6 \qquad f \approx \overset{\bullet\bullet}{f} = \sum_j a_j \cdot b_j \; (x,y,z)$$

Dans cette formule $a_j$ représente en définitive la description de la fonction f recherchée, les $b_j(x,y,z)$ étant connus. On utilise généralement des fonctions de base qui sont locales, répétitives, et séparables. Elles sont locales signifie que le support de chaque fonction $b_j$ est petit comparé à celui de f. Elles sont répétitives signifie que chaque fonction $b_j$ se déduit par translation d'une unique fonction $b(x,y,z)$. Cette déduction est de la forme

$$7 \qquad b_j \; (x,y,z) = b \; (x - x_j, y - y_j, z - z_j)$$

Elles sont séparables signifie enfin qu'il existe trois fonctions $b_x(x)$, $b_y(y)$, et $b_z(z)$ telles que :

$$8 \qquad b \; (x,y,z) = b_x \; (x) \cdot b_y \; (y) \cdot b_z \; (z)$$

On remarquera d'ailleurs que dans le cas où $b_x$ est égal à $b_y$ et à $b_z$ et où ces fonctions sont égales à une fonction en créneau, on retrouve la méthode dite des pixels carrés. On peut dire que la généralisation procurée par la méthode des fonctions de base permet de retrouver les autres méthodes citées plus haut, mais en leur donnant un fondement mathématique plus explicite, ce qui permet de mieux comprendre les opérations effectuées. Dans la pratique, les résultats les meilleurs sont obtenus avec des fonctions de base qui sont des B-splines, des sinus cardinaux, des fonctions de Hanning, ou de préférence des gaussiennes. Avec de telles fonctions de base on obtient des résultats de meilleure qualité que ceux produits par la méthode de JOSEPH au prix naturellement d'un temps de calcul plus élevé.

L'opération de projection de l'estimation $\hat{f}$ de f revient à calculer

$$9 \qquad \hat{P}_i\,(f)\;=\;\sum_j a_j \iiint g_i(x,y,z).b_j\,(x,y,z)\;dx\;dy\;dz$$

Dans cette expression $g_i$ désigne une fonction de pondération à valeur nulle (ou très faible) en dehors du secteur angulaire formé par la source $\underline{s}$ et la cellule $\underline{i}$. Les fonctions $g_i$ sont représentatives du support conique d'illumination de la cellule $\underline{i}$. On peut d'ailleurs écrire

$$10 \qquad h_{ij}\;=\;\iiint g_i\,(x,y,z).b_j\,(x,y,z,)\;dx\;dy\;dz$$

et le calcul de $\hat{P}$ se réduit alors au calcul de l'ensemble des $h_{ij}$. Chaque poids $h_{ij}$ traduit la contribution de la fonction de base $b_j$ à la projection de l'objet sur la cellule $\underline{i}$.

Le but de l'invention est donc de permettre, à partir de la connaissance d'échantillons $f_j$ d'une fonction f de trois variables, le calcul numérique de la projection de f sur une cellule détectrice $\underline{i}$, en assurant à la fois une bonne qualité du résultat obtenu, et des temps de calcul très réduits. Ces deux critères (qualité et rapidité) sont essentiels dans la reconstruction d'une fonction f(x,y,z) à partir d'un ensemble de projections coniques 2D au moyen de techniques algébriques de reconstruction. Alors que les méthodes de projection de l'état de la technique ne permettent pas d'assurer à la fois la qualité et la rapidité désirées, l'invention va le permettre.

Dans ce but, l'invention a pour objet un procédé selon la revendication 1.

L'invention a également pour objet un procédé de reconstruction tridimensionnelle d'un objet étudié, utilisant ce procédé de calcul de manière itérative pour, à partir d'une fonction discrète échantillonnée et à priori représentative de l'objet à reconstruire, retrouver itérativement la fonction f à reconstruire. Dans ce cas l'élément d'image s'identifie avec une cellule d'un multidétecteur 2D.

L'invention sera mieux comprise à la lecture de la description qui suit et à l'examen des figures qui l'accompagnent. Celles-ci ne sont données qu'à titre indicatif et nullement limitatif de l'invention. Les figures montrent :

- figure 1 : la représentation schématique d'une source d'illumination X et d'un multidétecteur ;
- figure 2 : un diagramme géométrique présentant différents repères utilisables pour exprimer les coordonnées des cellules détectrices et conduisant à des simplification de calcul ;
- figure 3 : une représentation symbolique (pour simplifier à deux dimensions) d'une fonction de pondération (à trois dimensions) selon l'invention;
- figure 4 : des particularités géométriques relatives aux projections et justifiant des simplifications de calcul retenues.

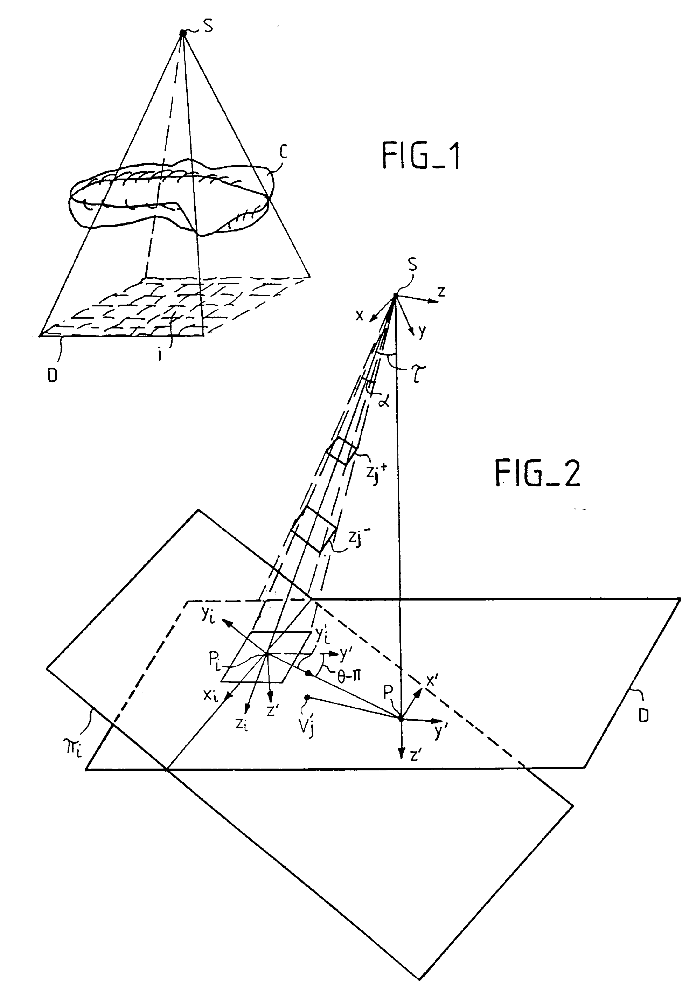

La figure 1 représente une source S de rayons X qui illumine un corps C de manière à ce que des cellules détectrices $\underline{i}$ d'un multidétecteur D mesurent l'atténuation de cette illumination après passage dans le corps C. Dans l'explication qui suivra on supposera que le multidétecteur utilisé est un plan (comme est assimilable à un plan la surface extérieure d'un écran intensificateur de luminance radiologique). Cependant, on pourrait facilement extrapoler l'invention à l'utilisation d'un multidétecteur concave comme le serait un multidétecteur au silicium muni de cellules photodétectrices. Un tel multidétecteur concave est en tous points de sa surface perpendiculaire au rayonnement X conique qui l'illumine.

La figure 2 montre trois repères orthonormés directs. Un premier repère orthonormé x,y,z est solidaire du corps C. Pour une position de l'ensemble source S-multidétecteur D il peut être aussi considéré comme solidaire de la source S. Le détecteur D supposé plan est caractérisé par un point central noté P qui est la projection orthogonale de la source S sur le plan de ce multidétecteur. Un repère x′,y′z′ attaché au détecteur D est alors caractérisé par le fait que z′ est co-linéaire, et de même sens, que SP tandis que x′et y′, pour simplifier orientés selon les bords orthogonaux du détecteur D, forment avec z′ un repère orthonormé direct. La cellule $\underline{i}$ est supposée être un carré du plan du détecteur D. Elle est attachée à un repère orthonormé $x_i\,y_i\,z_i$ direct tel que $z_i$ est co-linéaire à $SP_i$ ($P_i$ étant le centre de la cellule i). Les vecteurs orthonormés $x_i$ et $y_i$ sont orthogonaux à $z_i$, le vecteur $x_i$ étant contenu dans le plan du détecteur D. Le rayon $SP_i$ est perpendiculaire à un plan $\pi_i$ contenant le vecteur $x_i$.

Conformément à ce qui a été décrit précédemment, l'invention utilise le principe général de la décomposition de f en fonctions de base. On choisit des fonctions de base locales, séparables, répétitives et gaussiennes. On peut poser en conséquence que :

$$11 \qquad f(x,y,z) \approx \overset{\bullet\bullet}{f}(x,y,z) = \sum_j a_j \, b_j \, (x,y,z)$$

avec

$$b_j(x,y,z) = b_x (x - x_j) . b_y (y - y_j) . b_z (z - z_j)$$

On fait ici l'hypothèse que les voxels échantillons sont répartis sur un maillage dont la résolution est la même dans les trois directions de l'espace. En notant $\delta x$, $\delta y$ et $\delta z$ les pas d'échantillonnages suivant les trois axes x, y et z, on peut alors écrire

$$12 \qquad \delta_x = \delta_y = \delta_z$$

On choisit alors des fonctions de base gaussiennes de forme générale

$$12 \text{ bis} \qquad b_x(u) = \delta x . G_{\sigma b}(u).$$

Dans cette expression $G_{\sigma b}(u)$ désigne une gaussienne tronquée d'écart-type $\sigma_b$ telle que :

$$13 \qquad G_{\sigma b}(u) = (1/\sqrt{2\pi}\sigma_b)\exp(-u^2/2\,\sigma_b^2) \text{ si } |u| \leqq R_b$$

$$G_{\sigma b}(u) = 0 \qquad \text{si } |u| > R_b$$

Dans cette expression la valeur du rayon $R_b$ de troncature de la gaussiènne tronquée, ainsi que l'écart type $\sigma_b$ peuvent être choisis par l'utilisateur. On tronque les gausiennes par ce que sur un calculateur numérique il faut bien limiter les calculs. Mais cette troncature est sans effet notable sur la validité des calculs. De bons résultats pratiques ont été obtenus en prenant des gaussiennes dont la largeur à mi-hauteur est égale à $\delta x$, soit des gaussiennes dont l'écart-type est donné par

$$14 \qquad \sigma_b = \delta_x / 2 Ln(2\sqrt{2})$$

puisqu'il y a un rapport $2Ln(2\sqrt{2})$ entre la largeur à mi-hauteur et l'écart type d'une gaussienne. Dans cette expression Ln représente le logarithme Népérien.

De la même manière une valeur empirique satisfaisante pour le rayon $R_b$ a été $R_b = 3\delta x/2$. Le terme $\delta x$, $\delta y$ et $\delta z$ introduit est un terme de normalisation assurant que, dans le cas où f est une fonction constante (c'est-à-dire telle que f (x,y,z) = a), les coefficients $a_j$ sont constants et très peu différents de a. Cette normalisation permet éventuellement de simplifier le passage entre les échantillons $f_j$ et les coefficients $a_j$ des gaussiennes (en choisissant, de manière approchée $a_j = f_j$). Cependant cette normalisation n'est pas essentielle dans l'invention.

D'une manière connue la fonction de pondération $g_i$ doit être non négative à l'intérieur du polyèdre de sommet S et de base la cellule $\underline{i}$, et quasi nulle à l'extérieur de ce polyèdre. En outre, à l'intérieur du polyèdre le poids attribué à chacun des plans $z_i$(plan orthogonaux à l'axe $SP_i$) doit être le même puisque chacun de ces plans est coupé par le même nombre de rayons issus de la source. Cette contrainte se traduit par le fait que l'intégrale

$$15 \qquad \iint g_i (x_k,y_k,z_k) \, dx_k \, dy_k$$

évaluée dans le repère $x_i, y_i, z_i$ attaché à la cellule $\underline{i}$ doit être indépendante de $z_k$.

Pour satisfaire à ces deux conditions, dans l'invention, on a retenu des fonctions de pondération $g_i$ particulières. Elles sont gaussiennes. De préférence elles sont mêmes gaussiennes tronquées. En fait dans chaque plan $z_i$ = constante ces fonctions sont des gaussiennes 2D. Mais dans l'espace 3D ce ne sont pas des fonctions gaussiennes. On peut dire néanmoins que leur formulation mathématique fait intervenir des fonctions gaussiennes.

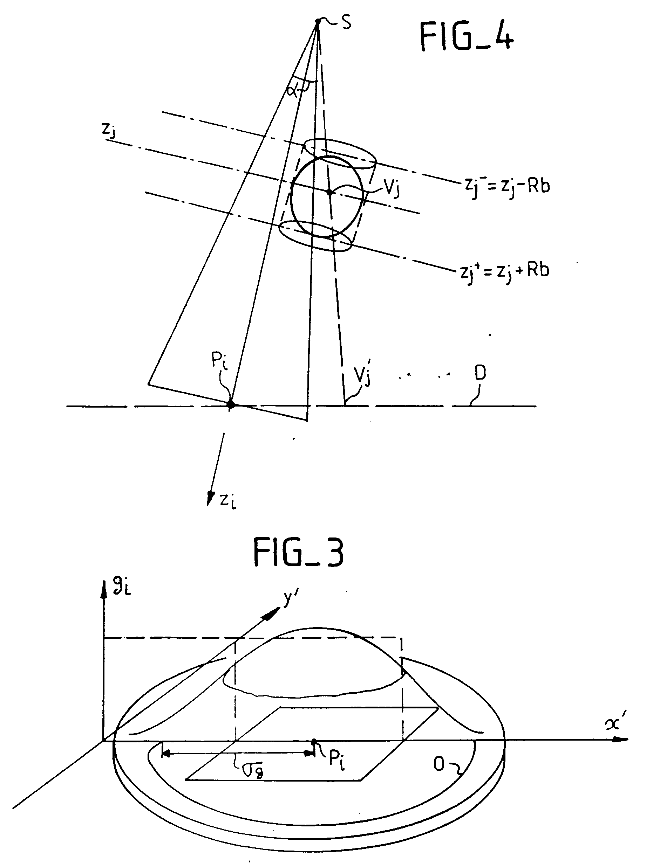

La figure 3 montre une représentation schématique de la restriction, au plan du détecteur D d'une de ces fonctions de pondération. Cette restriction est, à une très légère approximation près, une gaussienne 2D tronquée. Le centre de cette gaussienne est $P_i$, son écart-type est $\sigma_g$ et son rayon de troncature est $R_g$. L'écart type $\sigma_g$ et le rayon $R_g$ peuvent être choisis par l'utilisateur. Plutôt que de se placer dans le plan du détecteur, il peut être plus commode, pour donner l'expression mathématique de $g_i$, de se placer dans le repère de la cellule ($x_i$, $y_i$, $z_i$). Si on appelle O le cercle, dans le plan détecteur, de centre $P_i$ et de rayon $\sigma_g$ on peut admettre que la projection, selon une direction $z_i$, de ce cercle sur le plan $\pi_i$, attaché à la cellule $\underline{i}$ et défini précédemment, est une ellipse. Cette ellipse possède des axes orientés selon $x_i$ et $y_i$. En se souvenant que $x_i$ est commun au plan du détecteur D et au plan $\pi_i$, et en mesurant que le rayon $SP_i$ fait avec le rayon SP un angle $\tau$(figure 2), on peut écrire :

$$16 \qquad \sigma_{gx} = \sigma_g$$

$$\sigma_{gy} = \sigma_g \cos(\tau)$$

On peut alors choisir pour $g_i$ une expression séparable de la forme suivante :

$$17 \qquad g_i\,(x_k,y_k,z_k) \;=\; G_{\sigma gx(zk)}(x_k).G_{\sigma gy(zk)}(y_k)$$

Dans cette expression $G_\sigma(u)$ est une gaussienne 1D tronquée telle que

$$18 \qquad G_{\sigma gx(zk)}(x_k) = (1/\sqrt{2\pi}\sigma_{gx(zk)})\exp(- x_k^2/2\sigma^2_{gx(zk)})$$

si $|x_k|\leq R_{gx(zk)}$ et telle que $\qquad G_{\sigma gx(zk)}(x_k) = 0$
si $|x_k|>R_{gx(zk)}$

On définit $G_{\sigma gy(zk)}$ de la même façon. Dans ces expressions $R_{gx}$ est le rayon de troncature sur l'axe $x_i$ ($R_{gy}$ est de la même façon le rayon de troncature sur l'axe $y_i$). Les gaussiennes sont en fait paramétrées par $z_k$ puisque les écarts-type dépendent bien entendu de l'altitude de la fonction de base ainsi pondérée par rapport à la source S, du fait du caractère conique de la projection. Pour cette raison les écarts-type $\sigma_{gx}(z_k)$ et $\sigma_{gy}(z_k)$ sont définis par

$$19 \qquad \sigma_{gx(zk)} \;=\; \sigma_{gx}.z_k/SP_i$$
$$\sigma_{gy(zk)} \;=\; \sigma_{gy}.y_k/SP_i$$

On appellera $SP_i/z_k$ rapport d'agrandissement de la projection sur le plan $\pi_i$ parallèlement à $z_i$. On pourra écrire

$$20 \qquad FMAG(z_k) \;=\; SP_i/z_k$$

On pourra définir de même les rayons de troncature en fonction de FMAG de la manière suivante

$$21 \qquad R_{gx}(z_k) \;=\; R_g/FMAG(z_k)$$
$$et \qquad R_{gy}(z_k) \;=\; R_g\,\cos\tau/FMAG(z_k)$$

La fonction $g_i$ ainsi définie a les propriétés suivantes. La restriction de $g_i$ au plan $\pi_i$ est, par définition, une gaussienne 2D tronquée, d'écart-type $\sigma_{gx}$ suivant $x_i$ et d'écart type $\sigma_{gy}$ suivant $y_i$. Le support de $g_i$ est un cône de sommet S, d'axe $SP_i$, et de base elliptique (dans le plan $\pi_i$). La restriction de $g_i$, au plan détecteur, n'est pas différente d'une gaussienne 2D tronquée, d'écart-type $\sigma_g$ (suivant $x'$ ou $y'$). Le support de cette restriction est peu différent du cercle de centre $P_i$ et de rayon Rg. Le support de cette restriction de $g_i$ n'est pas un cercle parfait parce qu'en fait la source S n'est pas à l'infini. En effet si la source S était à l'infini, et si sa projection dans le plan $\pi_i$ était effectivement elliptique, sa projection dans le plan du détecteur serait rigoureusement un cercle. Comme la projection est conique, le cercle projeté est un peu déformé : l'erreur entraînée est du deuxième ordre. Elle peut être négligée. En outre, la fonction $g_i$ ainsi choisie satisfait à la contrainte selon laquelle

$$22 \qquad \iint g_i\,(x_k,y_k,z_k)\,dx_k.dy_k$$

est indépendante de $z_i$. En effet cette somme double peut s'écrire :

$$23 \qquad \iint G_{\sigma gx(zk)}(x_k).G_{\sigma gy(yk)}(y_k)dx_kdy_k \approx 1$$

qui est une constante. L'égalité n'est pas exacte parce que au lieu d'être des gaussiennes pures les fonctions gaussiennes utilisées sont tronquées. Enfin, en pratique, on choisit, comme pour les fonctions de base, un écart type de la fonction de pondération tel que la largeur à mi-hauteur des gaussiennes soit égale à la largeur d'un voxel (dans le repère attaché et à l'endroit de la cellule détectrice). De même on choisit un rayon de troncature Rg qui soit égal à trois demies de cette largeur. En conclusion, on peut écrire que l'expression obtenue pour l'estimation de la projection $\hat{P}_i$ (f) est la suivante :

$$24 \quad \hat{P}_j(f) = \delta_x\delta_y\delta_z \sum_j a_j \iiint G_{\sigma b}(x_j-x_k).G_{\sigma b}(y_j-y_k).G_{\sigma b}(z_j-z_k).A.dx_kdy_kdz_k$$

où $A = G_{\sigma gx(zk)}(x_k).G_{\sigma gy(zk)}(y_k)$

Dans l'expression précédente on va montrer qu'il est possible d'éliminer la variable $z_k$. Ceci est possible au prix d'une approximation. On fait l'hypothèse, largement vérifiée dans les applications citées, que le côté $\delta x'$ d'une cellule détectrice est très petit devant les distances SP ou $SP_i$. Dans les conditions où est actuellement utilisée l'invention, on a par exemple $\delta x'$ sensiblement égal à 0.8 mm et SP sensiblement égal à 1200 mm. Dans cette hypothèse l'angle d'ouverture $\alpha$ du cône correspondant au support de $g_i$ est très petit. Les valeurs numériques que nous venons de donner conduisent à $\alpha \approx 0.04°$.

On considère alors une fonction de base 3D $b_j$ et on regarde si son support possède une intersection vide avec le cône support de $g_i$. Dans le cas ou cette intersection serait vide sa contribution à la projection $\hat{P}_i(f)$ serait nulle. Dans le cas contraire l'intersection est bornée par deux demi plans parallèles tels que

$$25 \qquad Z_i = Z_j^+ \text{ ou } z_j^+ = z_j + R_b$$
$$Z_i = Z_j^- \text{ ou } z_j^- = z_j - R_b$$

Dans cette expression $z_j$ désigne la cote, dans le repère cellule ($x_i$, $y_i$, et $z_i$) du point $V_j$ où est centrée la fonction

de base $b_j$. La figure 4 montre le domaine local de définition de la fonction $b_j$ limitée autour du point $V_j$. Ce domaine est un cercle limité par le rayon $R_b$ ($R_b$ étant le rayon de troncature de la gaussienne définissant $b_j$). La figure 4 illustre l'intégration proposé par la formule 11. Au fur et à mesure que les fonctions de base locales sont prises en considération, on évalue leur intersection avec une partie du support de la fonction de pondération de la cellule détectrice considérée. Cette partie du support est normalement un tronc de cône, elliptique, dont la plus grande base est fixée par l'altitude $z_j - R_b$ et dont la plus petite base est fixée par l'altitude $z_j + R_b$. Dans l'invention, compte tenu d'une part que $\alpha$ est très petit, et que d'autre part $R_b$ est également petit (par hypothèse des bases "locales"), on s'est rendu compte qu'on pouvait approcher, au voisinage de $g_j$, le tronc de cône par un élément de cylindre d'axe $SP_i$. En d'autres termes on considère que pour $z_k$ appartenant à un intervalle $(z_j{}^-, z_j{}^+)$ on pourra écrire

$$26 \qquad \sigma_{gx}(z_k) \approx \sigma_{gx}(z_j)$$
$$\text{soit} \qquad \sigma_{gx}(z_k) \approx \sigma_g/FMAG(z_j)$$
$$\text{et} \qquad \sigma_{gy}(z_k) \approx \sigma_{gy}(z_j)$$
$$\text{soit} \qquad \sigma_{gy}(z_k) \approx \sigma_g \cos(\tau)/FMAG(z_j)$$

Dans cette expression k est attaché à la fonction de pondération alors que j est attaché à la fonction de base. La dernière expression présente l'intérêt que $\sigma_{gy}(z_k)$ est maintenant indépendant de $z_k$ puisque par approximation il n'est plus dépendant que de $z_j$. Dans ces conditions le calcul de l'approximation $\hat{P}(f)$ de la formule 24 se simplifie et devient

$$27 \quad \hat{P}_i(f) = \delta x \delta y \delta z \sum_j a_j \iint G_{\sigma b}(x_j - x_k) \cdot G_{\sigma b}(y_j - y_k) \cdot A \cdot dx_k dy_k$$

puisque les fonctions étant séparables, les intégrales sont séparables et que

$$28 \qquad \int_{-\infty}^{+\infty} G_{\sigma b}(z_j - z_k)\, dz_k \approx 1$$

En séparant l'intégrale sur $x_k$ et celle sur $y_k$ on peut écrire :

$$29 \quad \hat{P}_i(f) \approx \delta x \delta y \delta z \sum_j a_j \int G_{\sigma b}(x_j - x_k) \cdot G_{\sigma gx(zk)}(x_k)\, dx_k \int G_{\sigma b}(y_j - y_k) \cdot G_{\sigma gy(zk)}(y_k)\, dy_k$$

Or, pour une valeur de $\underline{i}$ donnée, chacune des deux intégrales de cette dernière expression peut s'interpréter comme un produit de convolution de deux gaussiennes centrées. Le produit de convolution de deux gaussiennes centrées est connu pour être une gaussienne également centrée, dont la variance est égale à la somme des deux variances des gaussiennes de départ. Ceci conduit alors à l'expression particulièrement simple, après calcul,

$$30 \qquad G_{\sigma b}(x_j - x_k) \cdot G_{\sigma gx(zk)}(x_k)\, dx_k \approx (1/\sqrt{2\pi}\sigma_x) \exp(-x_j{}^2/2\sigma_x{}^2)$$

et

$$G_{\sigma b}(y_j - y_k) \cdot G_{\sigma gy(zk)}(y_k)\, dy_k \approx (1/\sqrt{2\pi}\sigma_y) \exp(-y_j{}^2/2\sigma_y{}^2)$$

soit pour $\hat{P}_i(f)$ :

$$\hat{P}_i(f) \approx \delta x \delta y \delta z \sum_j a_j (1/2\pi\sigma_x\sigma_y) \exp(-x_j{}^2/2\sigma_x{}^2) \cdot \exp(-y_j{}^2/2\sigma_y{}^2)$$

L'expression des variances $\sigma_x{}^2$ et $\sigma_y{}^2$ est la suivante (somme des variances) :

$$31 \qquad \sigma_x{}^2 = \sigma_b{}^2 + \sigma_{gx}(z_j)^2$$
$$\sigma_y{}^2 = \sigma_b{}^2 + \sigma_{gy}(z_j)^2$$

On remarque que ces relations ne sont toutefois que des approximations, dans la mesure où les fonctions utilisées sont en fait des gaussiennes tronquées. La dernière relation présente cependant l'intérêt très grand d'être dépouillée de tout calcul intégral. En conséquence, avec les approximations justifiées jusqu'ici dans l'invention, on va pouvoir en un calcul très simple calculer la projection de la fonction échantillonnée.

Il est possible dans ces expressions de remplacer $\sigma_{gx}$ et $\sigma_{gy}$ par leurs valeurs en fonction de FMAG. Cette dernière expression s'écrit

$$32 \qquad \sigma_x{}^2 = \sigma_b{}^2 + \sigma_g{}^2 / FMAG\,(z_j)^2$$
$$\sigma_y{}^2 = \sigma_b{}^2 + \sigma_g{}^2 \cos^2(\tau) / FMAG(z_j)^2$$

Les valeurs $x_j$ et $y_j$ apparaissant dans l'équation 30 sont, pour chaque cellule $\underline{i}$, des coordonnées des voxels relatives au repère cellule $\underline{i}$.

Il est plus avantageux, pour simplifier l'algorithme de projection f de n'utiliser que des coordonnées relatives au repère détecteur. Pour cela on peut introduire un deuxième repère orthonormé direct du plan détecteur, noté $x_i, y_{i}'$ et $z_{i}'$. Le premier vecteur de ce repère est le même que le premier vecteur du repère cellule $\underline{i}$. Ceci est possible puisque le vecteur $x_i$ appartient également au plan détecteur comme indiqué précédemment. Le vecteur $z_{i'}$ est parallèle au vecteur $z'$ du repère attaché au plan détecteur. Le vecteur $y_{i'}$ se déduit de ces vecteurs $x_i$ et $z_{i}'$ comme étant le troisième vecteur d'un repère direct. On peut montrer que les vecteurs $x_i$ et $y_{i'}$ se déduisent des vecteurs $x'$ et $y'$ par une rotation plane d'angle $\Theta$ (figure 2) où $\Theta$ est l'angle entre le vecteur $y'$ et l'axe $PP_{i'}$. Toutefois, en pratique, pour des raisons liées à la structure de l'algorithme de projection décrit, on utilise non pas l'angle $\Theta$ mais une valeur approchée $\Theta'$. Cet angle $\Theta'$ est défini comme l'angle entre l'axe $y'$ et l'axe $PV_{i'}$, où $V_{i'}$ est la projection de $V_j$ sur le détecteur. Ce point apparaît sur la figure 2 ainsi que sur la figure 4. Cette approximation se justifie dans la mesure où $V_{i'}$ ne sera pris en considération que lorsque sa projection approchera $P_i$, du fait du caractère local de la fonction de pondération. Il sera donc possible dans les équations de prendre $\Theta'$ pour $\Theta$ sans que cette approximation conduise à une trop grande erreur de reconstruction.

Les valeurs $x_j$ et $y_j$ figurant dans l'équation 30 sont, dans le repère cellule i, l'abscisse et l'ordonnée du centre $V_j$ de la fonction de la base $b_j$. Exprimons les coordonnées $x_j$ et $y_j$ en fonction des coordonnées dans le repère plan $(x_i, y_{i'})$ du vecteur $P_i V_{i'}$. Les coordonnées de $P_i V'_j$ sont notées $(x'_j, y'_j)$. On peut remarquer que le vecteur $P_i V_{i'}$ est égal à la projection, sur le plan du détecteur et suivant la direction $SP_i$, du vecteur de coordonnées $(x_j, y_j)$. On en déduit alors

$$33 \qquad x'_j = x_j FMAG(z_j)$$
$$y'_j \approx y_j FMAG(z_j) / \cos(\tau)$$

Et ceci conduit alors à la formule finale qui transforme l'équation :

$$34 \qquad \hat{P}_i(f) \approx \frac{\delta x\,\delta y\,\delta z}{2\pi} \sum_j a_j \frac{FMAG(z_j)^2}{\sigma_x \sigma_y \cos(\tau)} . \exp \frac{-x'_j{}^2}{2\sigma_{x'}{}^2} . \exp \frac{-y'_j{}^2}{2\sigma_{y'}{}^2}$$

en posant

$$\sigma_{x'}{}^2 = \sigma_b{}^2 . FMAG(z_j)^2 + \sigma_g{}^2$$

et

$$\sigma_{y'}{}^2 = \sigma_b{}^2 . FMAG(z_j)^2 / \cos(\tau) + \sigma_g{}^2$$

L'avantage des exponentielles est qu'elles remplacent le calcul intégral par des fonctions qu'on peut calculer à l'avance et tabuler. Il en résulte un gain de temps.

On peut résumer les résultats acquis en donnant une description générale de l'algorithme proposé pour le calcul de la projection de $\hat{f}$. On disposera normalement des échantillons $f_j$ pour tout j de la fonction $\hat{f}$. On les projettera par l'intermédiaire de la matrice de projection et on obtiendra l'estimation de la projection $\hat{P}_i$ (f) pour toute valeur de i. C'est cette estimation que l'on comparera aux valeurs réellement mesurées pour en déduire par un épandage (back projection) des différences (ou des résidus), une nouvelle valeur d'échantillonnage de f de manière à réitérer le calcul en entier jusqu'à ce que petit à petit l'estimation soit la plus proche possible de la fonction recherchée. L'algorithme comporte donc les étapes suivantes :

- on passe de la base des échantillons à la base des fonctions de base gaussiennes. Ceci revient à calculer, connaissant $f_j$ tous les coefficients $a_j$. Au départ, compte tenu de ce que les fonctions de base $b_j$ sont à support borné, on pourra simplifier cette opération, en remarquant que les gaussiennes utilisées ont des largeurs à mi-hauteur de l'ordre de la taille des voxels en choisissant, en une première étape du procédé, $a_{j0}$ ≈ $f_{j0}$. Cette relation est approximative, mais elle est suffisante en pratique.

- on initialise tous les $\hat{P}_i$ (f) à zéro, et
- pour chaque valeur de j
  + on calcule les coordonnées, dans le repère détecteur, du point $V'_j$, projection du centre $V_j$ de la fonction de base sur le détecteur;
  + on en déduit $\Theta'$ = l'angle $(y', PV'_j)$ ;
  + on calcule, pour cette fonction de base située à une altitude $z_j$, la fonction FMAG $(z_j)$ ;
  + on calcule également $\tau$ qui est l'angle formé entre SP et $SP_i$ ;
  + on calcule enfin $\sigma_x'$ et $\sigma_y'$ ;
  + et ,pour chacun des pixels $(x_i', y_i')$ du plan détecteur qui appartient à la projection sur le détecteur du support de la fonction de base $b_j$ :
    = on calcule $x_{i'}$ et $y_{i'}$;
    = on calcule $h_{ij}$, contribution de la fonction de base $b_j$ au pixel $x_{i'}$, $y_{i'}$ ;
    = et on incrémente $\hat{P}_i$ (f) = $\hat{P}_i$ (f) + $h_{ij}.f_j$.

Bien entendu plutôt que de ne servir qu'à la reconstruction de la fonction f qu'on recherche, l'algorithme inventé peut permettre, connaissant une fonction f correctement échantillonnée d'en proposer des images en projection conique selon une direction principale SP à définir. L'avantage de l'invention est alors d'apporter une image sans artefact obtenue plus rapidement que dans l'état de la technique.

Le fait de choisir une fonction de pondération gaussienne, dont l'écart type est (et ceci avec toutes simplifications présentées) encore fonction de l'altitude de la fonction de base conduit normalement à une pondération naturellement adaptée à la nature conique de l'illumination. De cette manière on diminue les artefacts et on accélère la reconstruction.

L'invention concerne bien entendu toutes les exploitations faites des images ou reconstructions calculées. Ces exploitations comportent notamment la visualisation des structures reconstruites ou des images calculées.

## Revendications

1. Procédé de calcul et d'exploitation d'une image d'un objet tridimensionnel échantillonné en éléments de volume j, illuminée en projection conique, par exemple au sens des rayons X, ladite image étant formée dans le plan d'un détecteur comprenant des cellules i, dans lequel
   - on décompose l'objet tridimensionnel échantillonné sur un espace de fonctions $(b_j)$ de base gaussiennes, chaque fonction correspondant à un élément de volume j,
   - on calcule, pour chaque élément d'image de l'image projetée correspondant à une cellule du détecteur i, des contributions $(h_{ij})$ des fonctions de base, correspondant aux éléments de volume se projetant sur l'élément d'image considéré, chaque contribution $(h_{ij})$ étant égale à l'intégrale du produit de la fonction de base $(b_j)$ relative à un élément de volume j par une fonction $(g_i)$ représentative d'un support d'illumination de l'élément d'image considéré,
   - et on exploite l'image projetée,
   caractérisé en ce que
     - la fonction représentative du support $(g_i)$ est une fonction de pondération gaussienne.

2. Procédé selon la revendication 1 caractérisé en ce que les fonctions de pondération gaussiennes ont des écarts type, dans des directions perpendiculaires à l'illumination, dont les valeurs sont fonction de la position de l'élément de volume sur un rayon d'illumination.

3. Procédé selon la revendication 2 caractérisé en ce que les valeurs des écarts type sont des fonctions linéaires de la position de l'élément de volume considéré.

4. Procédé selon la revendication 2 caractérisé en ce que les valeurs des écarts type sont prises localement constantes au voisinage de cet élément de volume considéré.

5. Procédé selon l'une quelconque des revendications 1 à 4 caractérisé en ce que
     - on choisit des fonctions de pondération gaussiennes tronquées $(R_g)$.

6. Procédé selon la revendication 5 caractérisé en ce que

EP 0 379 399 B1

- on choisit des fonctions de pondération gaussiennes tronquées dont le rayon de troncature ($R_g$) est sensiblement égal à trois demies de la dimension géométrique d'un échantillon dans le volume échantillonné.

7. Procédé selon l'une quelconques des revendications 1 à 6 dans lequel
   - on choisit des fonctions de base répétitives, séparables, et locales caractérisé en ce que
   - on calcule la contribution ($h_{ij}$) en calculant les exponentielles d'une fonction des coordonnées ($x_j'$ $y_j'$)de la projection géométrique du centre ($V_j$) du support des fonctions de base.

8. Procédé selon l'une quelconque des revendications 1 à 7, caractérisé en ce que pour calculer la contribution des fonctions de base on applique la formule suivante :

$$34 \quad \hat{P}_i(f) \approx \frac{\delta x \delta y \delta z}{2\pi} \sum_j a_j \frac{FMAG(z_j^2)}{\sigma_x \sigma_y \cos(\tau)} . \exp \frac{-x'_j{}^2}{2\sigma_{x'}{}^2} . \exp \frac{-y_j'{}^2}{2\sigma_{y'}{}^2}$$

en posant
$$\sigma_{x'}{}^2 = \sigma_b{}^2 . FMAG(z_j)^2 + \sigma_g{}^2$$
et
$$\sigma_{y'}{}^2 = \sigma_b{}^2 . FMAG(z_j)^2 / \cos(\tau) + \sigma_g{}^2$$
dans laquelle:
   - FMAG représente un coefficient d'agrandissement tenant compte par la coordonnée $z_j$ de la nature conique de la projection;
   - $\sigma_b$ et $\sigma_g$ sont les écarts types des fonctions de base et de pondération respectivement;
   - $\delta x$ $\delta y$ et $\delta z$ sont les dimensions géométriques d'un échantillon;
   - et $\tau$ mesure l'inclinaison de la projection sur un élément d'image considéré par rapport à la projection normale.

9. Procédé selon l'une quelconque des revendications 1 à 8 caractérisé en ce que
   - on choisit des fonctions de pondération gaussiennes dont la largeur à mi-hauteur est sensiblement égale à la dimension géométrique d'un échantillon dans le volume échantillonné.

10. Procédé selon l'une quelconque des revendications 1 à 9, caractérisé en ce qu'on procède à une reconstruction tridimensionnelle de l'objet tridimensionnel échantillonné avec les étapes suivantes:
   - on calcule, selon le procédé revendiqué dans une quelconque des revendications 1 à 9, des contributions de fonctions de base gaussiennes estimées,
   - on compare les résultats de ces calculs à des mesures résultant d'une étude en projection de l'objet,
   - on en déduit une nouvelle estimation des fonctions de base,
   - et on réitère ces opérations jusqu'à ce que la comparaison soit satisfaisante.


**Claims**

1. Process for calculating and evaluating an image of a three-dimensional object sampled in volume elements, illuminated in conical projection, e.g. in accordance with the X-rays, the said image being formulated in the plane of a detector comprising i cells, wherein:
   - the sampled three-dimensional object is decomposed on a space of basic Gaussian functions (bj), each function corresponding to a volume element j,
   - for each image element of the projected image corresponding to a cell of the i detector, contributions (hij) of the basic functions are calculated, corresponding to the volume elements projecting themselves onto the image element concerned, each contribution (hij) being equal to the integral of the product of the basic function (bj) relating to a volume element j by a function (gi) representative of an illumination support of the image element concerned,
   - and the projected image is evaluated
characterised by the fact that
   - the function representative of the support (gi) is a Gaussian weighting function.

11

2. Process according to Claim 1, characterised by the fact that the Gaussian weighting functions have standard deviations, in directions perpendicular to the illumination, of which the values are a function of the position of the volume element on an illumination radius.

3. Process according to Claim 2, characterised by the fact that the values of the standard deviations are linear functions of the position of the volume element in question.

4. Process according to Claim 2, characterised by the fact that the values of the standard deviations are made locally constant in the vicinity of this volume element in question.

5. Process according to any one of Claims 1-4, characterised by the fact that,
      - truncated Gaussian weighting functions are selected.

6. Process according to Claim 5, characterised by the fact that,
      - truncated Gaussian weighting functions are selected of which the truncation radius (Rg) is approximately equal to three halves of the geometrical dimension of a sample in the volume sampled.

7. Process in accordance with any one of Claims 1-6, wherein
      - repetitive, separable and local basic functions are selected,
   characterised by the fact that
      - the contribution (hij) is calculated by calculating the exponentials of a function of the coordinates (xj', yj') of the geometrical projection of the centre (Vj) of the support of the basic functions.

8. Process according to any one of Claims 1-7, characterised by the fact that the contribution of the basic functions is calculated by applying the following formula:

$$\hat{P}_i(f) \approx \frac{\delta x \delta y \delta z}{2\pi} \sum_j a_j \frac{FMAG(z_j^2)}{\sigma_x \sigma_y \cos(\tau)} \cdot \exp \frac{-x'_j{}^2}{2\sigma_x{}'^2} \cdot \exp \frac{-y'_j{}^2}{2\sigma_y{}'^2}$$

with

$$\sigma_{x'}^2 = \sigma_b^2 . FMAG(Zj)^2 + \sigma_g^2$$

and

$$\sigma_{y'}^2 = \sigma_b^2 . FMAG(Zj)^2 / \cos(\tau) + \sigma_g^2$$

wherein:
   - FMAG represents a magnification coefficient, account being taken, where the coordinate Zj is concerned, of the conical nature of the projection;
   - $\sigma_b$ and $\sigma_g$ are standard deviations of the basic functions and weighting functions respectively;
   - $\delta x$, $\delta y$ and $\delta z$ are the geometrical dimensions of a sample;
   - and $\tau$ is a measure of the inclination of the projection on an image element considered, in relation to the normal projection.

9. Process according to any one of Claims 1-8, characterised by the fact that
      - Gaussian weighting functions are selected of which the width half-way up is approximately equal to the geometrical dimension of a sample in the volume sampled.

10. Process according to any one of Claims 1-9, characterised by the fact that a three-dimensional reconstruction of the sampled three-dimensional object is carried out with the following stages:
   - contributions of estimated Gaussian basic functions are calculated according to the process claimed in any one of Claims 1-9,
   - the results of these calculations are compared with measurements resulting from a projection study of the object,
   - a fresh estimate of the basic functions is deduced therefrom,
   - and these operations are repeated until the comparison is satisfactory.

**Patentansprüche**

1. Verfahren zur Berechnung und Auswertung eines Bildes eines dreidimensionalen, in Volumenelemente unterteilten Objektes, das in kegelförmiger Projektion beleuchtet wird, beispielsweise mittels Röntgenstrahlen, wobei das Bild in der Ebene eines mit Zellen (i) versehenen Detektors gebildet wird, und wobei
   - das dreidimensionale unterteilte Objekt in einen Raum von Funktionen ($b_j$) auf Gauss'scher Basis zerlegt wird, wobei jede Funktion einem Volumenelement (j) entspricht,
   - für jedes Bildelement des projizierten Bildes entsprechend einer Zelle (i) des Detektors die Beiträge ($h_{ij}$) der Basisfunktionen berechnet werden, entsprechend den auf das in Betracht kommende Bildement projizierten Volumenelementen, wobei jeder Beitrag ($h_{ij}$) gleich dem Integral ist des Produktes aus der Basisfunktion ($b_j$) bezüglich eines Volumenelementes (j) mit der Funktion ($g_i$), die die Beleuchtungsunterstützung des in Betracht kommenden Bildelementes darstellt und
   - das projizierte Bild ausgewertet wird,
   dadurch gekennzeichnet, daß die die Unterstützung ($g_i$) darstellende Funktion eine Funktion mit Gauss'scher Verteilung ist.

2. Verfahren nach Anspruch 1, dadurch gekennzeichnet, daß die Funktionen mit Gauss'scher Verteilung Abweichungen in Richtungen senkrecht zur Beleuchtung aufweisen, deren Werte eine Funktion der Position des Volumenelementes entlang eines Beleuchtungsstrahles ist.

3. Verfahren nach Anspruch 2, dadurch gekennzeichnet, daß die Werte der Abweichungen lineare Funktionen der Position des in Betracht kommenden Bildelementes sind.

4. Verfahren nach Anspruch 2, dadurch gekennzeichnet, daß die Werte der Abweichungen örtlich konstant in der Nähe dieser betrachteten Volumenelemente angenommen werden.

5. Verfahren nach einem der Ansprüche 1 bis 4, dadurch gekennzeichnet, daß
   - Funktionen stumpfer Gauss'scher Verteilung ($R_g$) ausgewählt werden.

6. Verfahren nach Anspruch 5, dadurch gekennzeichnet, daß
   - Funktionen stumpfer Gauss'scher Verteilung ausgewählt werden, deren Abschnittsradius ($R_g$) im wesentlichen gleich drei Hälften der geometrischen Abmessung eines Teils aus dem unterteilten Volumen entspricht.

7. Verfahren nach einem der Ansprüche 1 bis 6, bei dem
   - wiederholbare trennbare und örtliche Basisfunktionen ausgewählt werden,
   dadurch gekennzeichnet, daß
   - der Beitrag ($h_{ij}$) berechnet wird, indem die Exponenten einer Funktion mit den Koordinaten ($x_j'$ $y_j'$) der geometrischen Projektion des Zentrums ($V_j$) der Unterstützung der Basisfunktionen berechnet werden.

8. Verfahren nach einem der Ansprüche 1 bis 7, dadurch gekennzeichnet, daß zur Berechnung des Beitrages der Basisfunktionen die folgende Formel eingesetzt wird:

$$34 \quad \hat{P}_i(f) \approx \frac{\delta x \delta y \delta z}{2\pi} \sum_j a_j \frac{FMAG(z_j^2) \cdot \exp}{\sigma_x \sigma_y \cos(\tau)} \frac{-x'_j{}^2}{2\sigma_{x'}{}^2} \cdot \exp \frac{-y_j'{}^2}{2\sigma_{y'}{}^2}$$

wobei

$$\sigma_{x'}{}^2 = \sigma_b{}^2 \cdot FMAG(z_j)^2 + \sigma_g{}^2$$

und

$$\sigma_{y'}{}^2 = \sigma_b{}^2 \cdot FMAG(z_j)^2 / \cos(\tau) + \sigma_g{}^2$$

wobei:
   - FMAG einen Vergrößerungskoeffizient darstellt, der durch die Koordinate $z_j$ die konische Art der Projektion berücksichtigt,
   - $\sigma_b$ und $\sigma_g$ Abweichungen der Basisfunktionen bzw. der Verteilung sind,
   - $\delta_x$ $\delta_y$ und $\delta_z$ geometrische Dimensionen eines Teils sind, und
   - $\tau$ die Neigung der Projektion auf ein in Betracht gezogenes Bildelement bezüglich der normalen Projektion darstellt.

9. Verfahren nach einem der Ansprüche 1 bis 8, dadurch gekennzeichnet, daß
- Gauss'sche Verteilungsfunktionen gewählt werden, deren Breite auf halber Höhe im wesentlichen gleich der geometrischen Dimension eines Teils aus dem unterteilten Volumen ist.

10. Verfahren nach einem der Ansprüche 1 bis 9, dadurch gekennzeichnet, daß eine dreidimensionale Rekonstruktion des dreidimensionalen unterteilten Objektes mit den folgenden Schritten erfolgt:
- es werden nach dem in den Ansprüchen 1 bis 9 beschriebenen Verfahren die Beiträge der geschätzten Gauss'schen Basisfunktionen berechnet
- die Resultate dieser Berechnungen mit Messungen verglichen, die aus einer Projektionsuntersuchung des Objektes stammen,
- daraus eine neue Schätzung der Basisfunktionen abgleitet wird und
- diese Schritte erneut eingeleitet werden, bis der Vergleich zufriedenstellend ist.

FIG_1

FIG_2

FIG_4

$z_j^- = z_j - Rb$

$z_j^+ = z_j + Rb$

FIG_3